# EUROPÄISCHE PATENTANMELDUNG

(11) **EP 4 062 734 A1**
(43) Veröffentlichungstag der Anmeldung: **28.09.2022**
(21) Anmeldenummer: 22163624.4
(22) Anmeldetag: 22.03.2022
(51) Int. Cl.: A01C 9/00, B60R 3/00

(54) **LEGEMASCHINE FÜR HACKFRÜCHTE**

(30) Priorität: 22.03.2021 DE 202021101468 U
(71) Anmelder: Grimme Landmaschinenfabrik GmbH & Co. KG, 49401 Damme (DE)
(72) Erfinder: Fischer, Oliver, 27232 Sulingen (DE); Gottke Haskamp, Frank, 49439 Steinfeld (DE)
(74) Vertreter: Wischmeyer, André

(57) **Zusammenfassung**

Die Erfindung betrifft eine Legemaschine für Hackfrüchte, vorzugsweise für Kartoffeln, mit einem Rahmen, der zwischen einem vorderen Kupplungselement und einem hinteren, insbesondere eine Bodenabstützung aufweisenden Ende verläuft, mit wenigstens einer Legevorrichtung, mit wenigstens einem Bunker für das zu legende Saatgut, mit einem von einer Seite der Legemaschine her betretbaren Laufsteg, wobei der Laufsteg zwischen Bunker und Legevorrichtung angeordnet ist (Fig. 1).

## Beschreibung

Die vorliegende Erfindung betrifft eine Legemaschine für Hackfrüchte, vorzugsweise für Kartoffeln, mit einem Rahmen, der zwischen einem vorderen Kupplungselement und einem hinteren, insbesondere eine Bodenabstützung aufweisenden Ende verläuft, mit wenigstens einer Legevorrichtung, mit wenigstens einem Bunker für das zu legende Saatgut, vorzugsweise in Form von Kartoffelknollen, mit einem von einer Seite der Legemaschine her betretbaren Laufsteg.

Ein Gegenstand nach dem Oberbegriff des Anspruchs 1 ist der US 9,258,939 B2 zu entnehmen. Der dort abgebildete Laufsteg ist zwischen einem vorderen Kupplungselement und der Legevorrichtung angeordnet. Vom Laufsteg her ist eine Betrachtung der Legevorrichtung, deren Sammeltrichter direkt vom Bunker aus mit Knollen bestückbar sind und die entsprechend dicht am Bunker angeordnet ist, möglich. Dies gilt allerdings nur für den oberen und in Fahrtrichtung vorderen Teil der Legevorrichtung.

Es ist Aufgabe der vorliegenden Erfindung, die Wartungsfreundlichkeit des gattungsgemäßen Gegenstands zu verbessern.

Die Aufgabe wird gelöst durch einen Gegenstand gemäß Anspruch 1. Vorteilhafte Ausgestaltungen der Erfindung sind den auf den Anspruch 1 rückbezogenen Unteransprüchen sowie der nachfolgenden Beschreibung zu entnehmen.

Erfindungsgemäß weist eine gattungsgemäße Legemaschine einen Laufsteg auf, der zwischen Bunker und Legevorrichtung angeordnet ist. Hierdurch ist zumindest in einer ersten Betriebsstellung bzw. einer Ausgangsposition für Wartungszwecke der Übergabebereich zwischen Bunker und Legevorrichtung verbessert einsehbar. Das Bedienpersonal kann verbessert etwaige Überprüfungen des Bunkerinhalts vornehmen und ist in der Lage, die Entnahme von Hackfruchtknollen bzw. des zu legenden Saatguts aus dem Bunker und die Übergabe an die Legevorrichtung zu überprüfen sowie etwaige, ungewünschte Anhäufungen oder Fehlfunktionen beheben. Mit der Verbesserung der Bedienung und Wartung der Legemaschine geht gegebenenfalls der Nachteil einer verlängerten Maschine einher, wenn der Bereich zwischen Legevorrichtung und Bunker für die Anordnung des Laufstegs in Fahrt- und Längsrichtung der Legemaschine vergrößert werden muss. Dies ist insbesondere für Becherlegemaschinen, deren Legevorrichtungen möglichst dicht am Bunker angeordnet werden sollten, nachteilig, ermöglicht jedoch eine verbesserte Wartung dieses Übergabebereiches.

Eine Anordnung zwischen Bunker und Legevorrichtung bedeutet, dass auf einer Höhe betrachtet der Laufsteg auf der einen Seite vom Bunker begrenzt ist und auf der anderen Seite von zumindest Teilen der zumindest einen Legevorrichtung. Beispielsweise verläuft der Laufsteg zwischen einer in Fahrtrichtung vorderen Bunkerwand und einem in Fahrtrichtung hinteren Teil einzelner oder jeweiliger Legevorrichtungen.

Bei einer mehrreihigen Legemaschine sind typischerweise mehrere Legevorrichtungen in Fahrtrichtung betrachtet nebeneinander angeordnet. Vorzugsweise verläuft der Laufsteg, der zumindest von einer Seite her betretbar ist, von dieser Seite her quer zur Fahrtrichtung bis zur letzten Legevorrichtung, er muss allerdings nicht über die gesamte Breite der Maschine verlaufen. Vorzugsweise erstreckt sich der Laufsteg quer über bzw. durch die Legemaschine über zumindest eine Hälfte, vorzugsweise über zumindest 2/3 der Breite der Legevorrichtung und insbesondere über zumindest 80% der Breite der Legemaschine, um eine möglichst gute Erreichbarkeit etwaiger Bedienstellen zu erhalten.

Der durch die Anordnung des Laufstegs zwischen Bunker und Legevorrichtung erfindungsgemäß ausgebildete Wartungsbereich kann sowohl bei gezogenen als auch bei getragenen Legemaschinen realisiert werden. Auch letztere können eine Bodenabstützung aufweisen in Form von Dammformblechen oder Stützrädern. Sowohl bei gezogenen als auch bei getragenen Legemaschinen kann die Bodenabstützung durch ein oder mehrere Räder, Walzen oder ein anderes, endseitiges Bodenbearbeitungsgerät ausgebildet werden.

Der Laufsteg erfindungsgemäßer Legemaschinen kann von einer oder von beiden Seiten der Legemaschine her erreichbar bzw. betretbar sein. Hierfür kann vorzugsweise eine Aufstiegshilfe in Form einer Leiter oder Tritten in oder an Rahmenelementen ausgebildet sein.

Es versteht sich, dass eine erfindungsgemäße Legemaschine zusätzlich auch noch andere funktionale Teile, beispielsweise zwischen Kupplungsmittel und Legevorrichtung angeordnete Vorratsbehälter für Düngemittel aufweisen kann.

Um einen Übergang des Saatguts zwischen Bunker und Legevorrichtung zu ermöglichen, ist der Laufsteg insbesondere nicht nur zwischen Bunker und Legevorrichtung angeordnet, sondern auch oberhalb zumindest eines Auslaufbereiches des Saatguts aus dem Bunker und/oder oberhalb eines oder mehrerer Sammeltrichter der Legevorrichtung.

Vorteilhafterweise ist der Laufsteg aus einer ersten Betriebsstellung in eine zweite Stellung überführbar ausgebildet, vorzugsweise in der der Laufsteg gegenüber der Betriebsstellung verschwenkt ist. Die zweite Stellung kann eine zweite Betriebsstellung sein, in der der Laufsteg ebenfalls zu Wartungszwecken begehbar ist. Es handelt sich allerdings insbesondere für den Fall, dass der Laufsteg gegenüber der Betriebsstellung verschwenkt ist, um eine Anordnung, in der der Laufsteg nicht betreten werden kann oder soll. Eine Verschwenkung des Laufstegs vorzugsweise um eine Achse quer zur Fahrtrichtung führt von oben betrachtet zu einer geringeren Erstreckung des Laufstegs in Fahrtrichtung. Für ein Vorverschwenken des Bunkers, um im Bunker hinten befindliches Saatgut in Richtung der Legevorrichtung zu überführen, kann dann eine dichtere Anordnung zumindest von Teilen des Bunkers in Richtung der Legevorrichtung ermöglicht werden. Alternativ oder ergänzend kann der Laufsteg durch Schwenklager auch seitlich hochgeschwenkt werden, so dass der Bunker an dem Laufsteg entlang verschwenken kann. Der Laufsteg ist in der ersten Betriebsstellung bzw. Ausgangsposition für Wartungszwecke, wenn er auf ebenem Untergrund eine zumindest im Wesentlichen horizontal verlaufende, betretbare Oberfläche aufweist und somit begehbar ist.

Die zweite Stellung des Laufstegs kennzeichnet sich somit zumindest dadurch, dass dieser relativ zum Bunker bewegt wurde. Für eine besonders flexible Anordnung des Laufstegs kann dieser weiterhin auch relativ zum Tragrahmen der Legemaschine beweglich angeordnet sein.

Während der Laufsteg insbesondere lediglich durch die von oben betretbaren Flächenelemente ausgebildet wird, kann die Erreichbarkeit desselben durch Treppen, Leitern oder Tritte am oder im Rahmen ermöglicht werden, die an diesem gegebenenfalls schwenkbar festgelegt sind.

Die Verschwenkung des Laufstegs kann für die Einnahme der zweiten Stellung beispielsweise vor Inbetriebnahme der Legemaschine manuell und entsprechend mechanisch über Schwenklager erfolgen. Vorzugsweise ist jedoch vorgesehen, den Laufsteg durch zumindest ein Stellmittel zu bewegen bzw. insbesondere zu verschwenken. Eine Bewegbarkeit bzw. Verschwenkbarkeit des Laufstegs durch ein Stellmittel erleichtert den Einsatz und die automatisierte Einnahme einer zweiten und insbesondere einer Außerbetriebsstellung, die beispielsweise mit der Bunkerbewegung einhergeht. In der Außerbetriebsstellung des Laufstegs ist dieser nicht begehbar. Das Stellmittel kann beispielsweise auch das für die Verschwenkung des Bunkers verwendete Stellmittel sein. Es kann sich allerdings auch um ein oder mehrere Stellmittel, die ausschließlich für die Relativbewegung des Laufstegs vorgesehen sind, handeln.

Vorzugsweise ist der Laufsteg durch das Stellmittel des Bunkers gemeinsam mit diesem verschwenkbar, so dass die Bewegung des Laufstegs zwangsgeführt mit der Bewegung des Bunkers relativ zum Rahmen erfolgt. Dies erleichtert die automatisierte Bewegung des Laufstegs, der zwecks Überführung in die weitere Position zusätzlich noch am Rahmen angelenkt sein kann.

Vorzugsweise ist der Laufsteg relativ zum Rahmen und insbesondere zumindest zu dem Teil des Rahmens schwenkbar gelagert, an dem auch ein Bunker schwenkbar gelagert ist. Hierdurch wird die Anordnung des Laufstegs besonders variabel und flexibel, so dass für eine Überführung aus der eine Wartung ermöglichenden ersten Stellung und Betriebsstellung sowohl eine Parallelverschiebung als auch eine Verschwenkung des Laufstegs ermöglicht wird.

Gemäß einer weiteren erfindungsgemäßen ist der Laufsteg über wenigstens einen Lenker mit dem Rahmen verbunden ist. Insbesondere kann der Laufsteg mittels wenigstens eines Drehgelenks und/oder mittels wenigstens eines Drehschubgelenks am Rahmen und/oder am Bunker gelagert sein, so dass eine optimale Überführung in eine zweite Stellung des Laufstegs ermöglicht ist.

Insbesondere ist der Laufsteg relativ zum Bunker schwenkbar und vorzugsweise am Bunker schwenkbar gelagert. Vorzugsweise bildet die vordere Bunkerwand eine Fläche aus, an die die Oberfläche des Laufstegs heran angenähert und positioniert werden kann, damit der Laufsteg möglichst wenig Bauraum einnimmt. Es versteht sich, dass das oder die eine Auftrittsfläche des Laufstegs ausbildenden Flächenelemente in ihrer flächigen Erstreckung deutlich größer sind als die in einer Betriebsstellung des Laufstegs ausgebildete Höhe dieser Flächenelemente.

Weiterhin kann der Laufsteg gemäß einer weiteren vorteilhaften Ausgestaltung der Erfindung über zumindest einen Bunkerlenker am Bunker gelagert sein. Eine Anordnung mittels eines Lenkers am Bunker und/oder eines Lenkers am Rahmen ermöglicht insbesondere die Ausbildung eines vorteilhaften Mehrgelenks, über das der Laufsteg beispielsweise parallel verschoben werden kann in eine höhere oder niedrigere, begehbare Position, so dass die Wartung des Bereichs auch bei verschwenktem Bunker ermöglicht wird.

Beispielsweise kann der Laufsteg in einer Seitenansicht Teil eines insbesondere als Parallelogrammführung ausgebildeten Viergelenks sein. Bei einer solchen Ausbildung sowie in einer Ausbildung, in der in einer Seitenansicht der Laufsteg Teil eines Drei-, Vier- oder anderen Mehrgelenks mit Rahmen und Bunker ist, wird eine optimale Ausrichtung des Laufstegs mittels der einstellbaren Zwangsführung durch das Mehrgelenk ermöglicht.

Zu Sicherungszwecken kann die erfindungsgemäße Legemaschine ein rahmenseitig angeordnetes Geländer aufweisen, welches entlang des Laufstegs führt. Die Anordnung des Geländers am Laufsteg selbst wäre auch möglich, wobei allerdings zu Zwecken vergrößerter Sicherheit eine feste Montage am Rahmen vorteilhaft ist. Entsprechend kann das Geländer, welches den Raum, in dem sich eine Wartungsperson befinden kann, begrenzt, mit verschwenken oder fest angeordnet sein. Etwaige durch Bunkerbewegungen bewirkte Änderungen der Abmessungen des Bereiches, in dem sich eine Wartungsperson befindet, können durch flexible Seitenbegrenzungen, beispielsweise in Form von Ketten, die zwischen Geländer und dem sich bewegenden Bunker verlaufen, ausgeglichen werden.

Vorzugsweise ist eine Leiter und/oder wenigstens eine Trittstufe vorgesehen, die an einer Seite der Legemaschine angeordnet ist und zum Laufsteg hochführt. Hiermit ist die Zugänglichkeit des Laufstegs gesichert. Insbesondere ist eine um eine Achse schwenk- und/oder drehbar gelagerte Trittstufe vorhanden, die gemeinsam, nach oder vor mit dem Laufsteg in eine Außerbetriebsstellung überführbar ist. Die Trittstufe kann Teil der Leiter sein. In einer Außerbetriebsstellung, in der die Trittstufe hochgeklappt oder verschwenkt ist und somit nicht auf ihrer Oberseite betretbar ist, ist für das Bedienpersonal ersichtlich, dass der Laufsteg dann nicht betreten werden soll. Dies kann insbesondere vorteilhaft sein für Positionen, in denen der Bunker verschwenkt ist und aus Gründen der Maschinensicherheit die Begehung des Laufstegs nicht gewünscht wird.

Die Betätigung einer solchen Trittstufe kann durch das für eine Bewegung des Laufstegs aus der ersten Position benötigte Stellmittel bewirkt werden. Es kann sich allerdings auch um ein separates Trittstufenstellmittel handeln, welches beispielsweise in Abhängigkeit der Position oder der gewünschten Position des Laufstegs angesteuert wird.

Vorteilhafterweise wird eine begehbare Fläche des vornehmlich durch den Laufsteg ausgebildeten Wartungsbereichs durch eine am Bunker angeordnete Abdeckung vergrößert, die in einer Wartungsposition der Legemaschine mit dem Laufsteg eine begehbare Fläche ausbildet. Eine solche Abdeckung ist hinsichtlich ihrer Oberseite insbesondere bündig und somit gleich hoch mit dem oder den Flächenelementen des Laufstegs ausgebildet.

Gemäß einer vorteilhaften Ausbildung der Erfindung ist der Laufsteg entlang seiner Breite mehrteilig ausgebildet, wobei die zumindest zwei Teile relativ zueinander bewegbar sind. Durch eine relative Beweglichkeit der Teile zueinander und insbesondere ein Hoch- oder Verschwenken eines der beiden Teile, während der andere Teil noch weiterhin in einer Wartungsposition befindlich ist, wird der Zugriff auf unter dem Laufsteg befindliche Bedienstellen erleichtert, da eine Wartungsperson auf dem noch begehbaren Bereich verbleiben kann. Insbesondere in Varianten, in denen nur ein Stellmittel für den Laufsteg vorhanden ist, können die beiden Teile des Laufstegs miteinander verriegelt werden, so dass sie gemeinsam bewegbar sind. Hierfür kann zwischen den beiden Elementen ein Verschluss- bzw. Riegelmechanismus vorgesehen sein. Dieser kann auch in Varianten vorhanden sein, in denen beide oder sämtliche Flächenelemente, die den Laufsteg ausbilden, separat über eigene Stellmittel bzw. Lenker bewegbar sind.

Vorteilhafterweise weist die erfindungsgemäße Legemaschine zumindest einen Lagesensor auf, der zum Einschalten eines Beleuchtungsmittels vorgesehen ist. Dieses Beleuchtungsmittel kann den Wartungsbereich beleuchten.

Das Beleuchtungsmittel kann beispielsweise immer dann eingeschaltet werden, wenn ein Betreten des Wartungsbereichs gewünscht wird und der Laufsteg sich in seiner Wartungsposition befindet. Über die Maschinensteuerung einer Legemaschine kann hierbei das Einschalten des Beleuchtungsmittels auch davon abhängig gemacht werden, ob eine Vorwärtsbewegung der Legemaschine erfolgt.

Weitere Vorteile und Einzelheiten der Erfindung sind der nachfolgenden Figurenbeschreibung zu entnehmen. Schematisch dargestellt zeigt:
- Fig. 1: eine perspektivische Ansicht einer erfindungsgemäßen Vorrichtung,
- Fig. 2: eine Seitenansicht des Gegenstands nach Fig. 1 (teilweise),

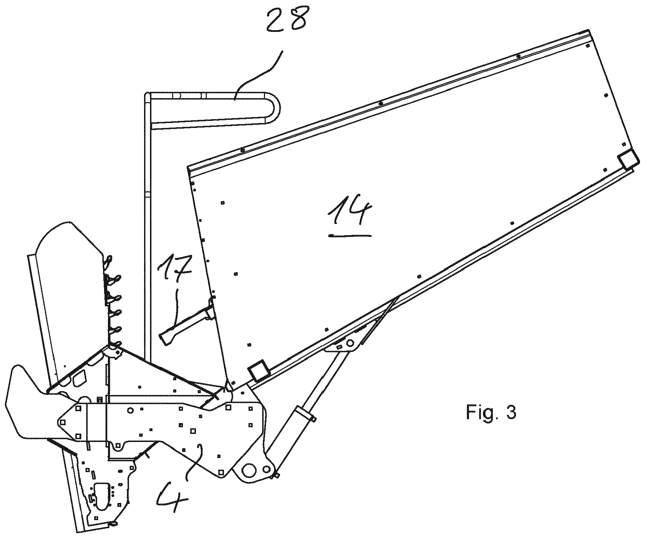

- Fig. 3: eine Teilansicht eines weiteren erfindungsgemäßen Gegenstands,
- Fig. 4: eine teilweise Seitenansicht eines weiteren erfindungsgemäßen Gegenstands,
- Fig. 5: den Gegenstand nach Fig. 4 in einer weiteren Stellung,
- Fig. 6: eine teilweise Seitenansicht eines weiteren erfindungsgemäßen Gegenstands,
- Fig. 7: eine perspektivische Darstellung (teilweise) eines weiteren erfindungsgemäßen Gegenstands.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll, sind funktional gleichwirkende Teile mit identischen Bezugsziffern versehen.

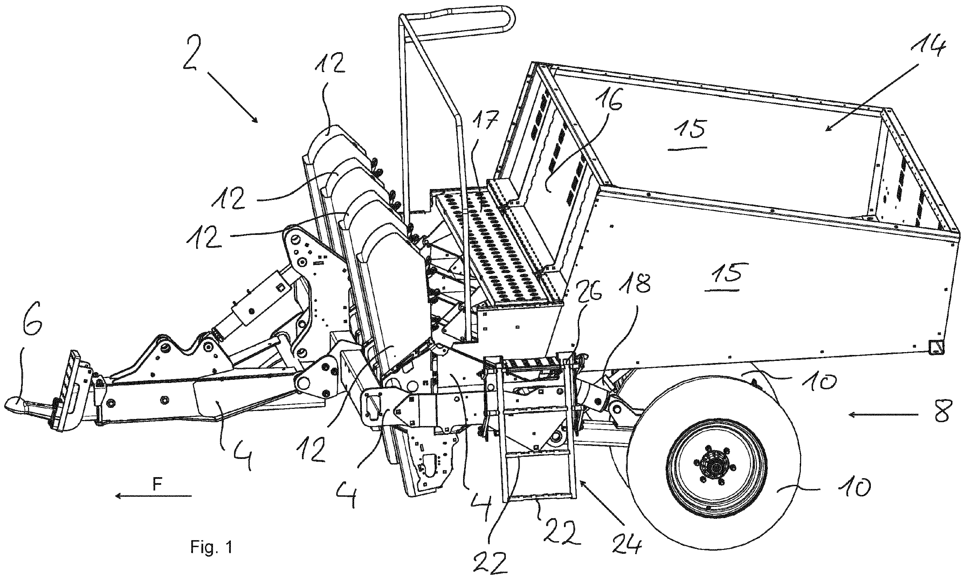

Ein erfindungsgemäßer Gegenstand ist gemäß Fig. 1 als gezogene Legemaschine 2 perspektivisch dargestellt. Sie weist einen mehrteiligen Rahmen 4 auf, der zwischen einem vorderen Kupplungselement 6 und einem eine Bodenabstützung 8 aufweisenden Ende verläuft. Die Bodenabstützung 8 ist als Fahrwerk mit Rädern 10 ausgebildet.

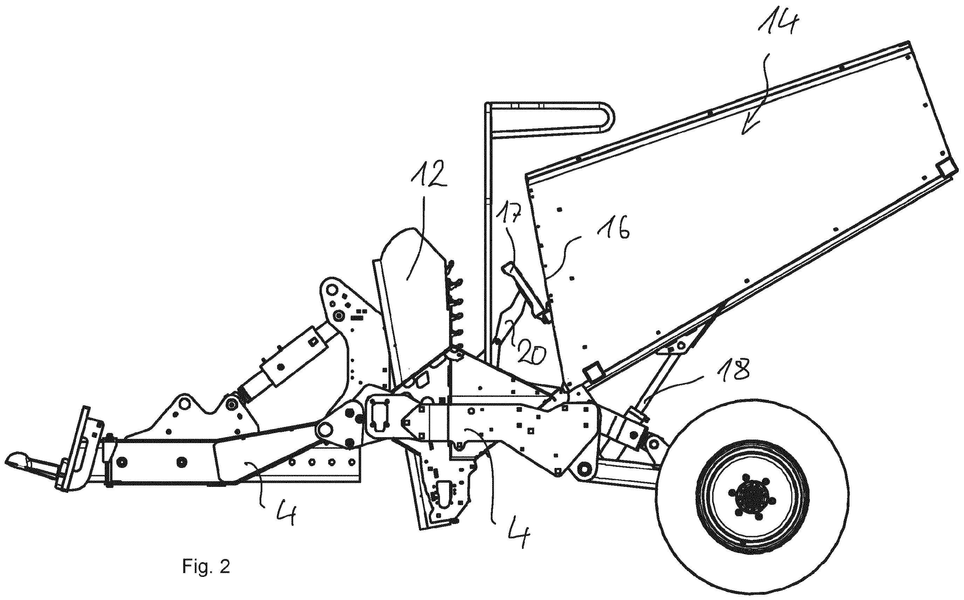

Die Legemaschine ist vierreihig ausgebildet mit entsprechend vier Legevorrichtungen 12, die in Fahrtrichtung betrachtet nebeneinander angeordnet sind. Die von den Legevorrichtungen 12 zu legenden Kartoffelknollen werden in einem Bunker 14 bevorratet, welcher Seitenwände 15 und eine vordere Wand 16 aufweist. Des Weiteren weist die Legemaschine einen Laufsteg 17 auf, der in seiner hauptsächlichen Längserstreckung ebenfalls quer zur Fahrtrichtung F verläuft. Mittels eines Stellmittels 18 in Form eines Hydraulikzylinders ist sowohl der Bunker als auch der an diesem bzw. der vorderen Bunkerwand 16 schwenkbar festgelegte Laufsteg 17 aus der in der Fig. 1 dargestellten ersten Betriebsstellung in eine in der Fig. 2 dargestellte zweite Stellung, in der der Laufsteg 17 relativ zum Bunker 14 und zum Rahmen 4 verschwenkt ist, überführbar.

Erkennbar ist in der Seitenansicht nach Fig. 2 der Laufsteg 17 Teil eines Viergelenks. Das den Laufsteg 17 ausbildende Lochblechelement ist gelenkig mit einem oder mehreren parallel verlaufenden Lenkern 20 am Rahmen 4 gelenkig angebunden, während der Laufsteg 17 seitlich an der vorderen Bunkerwand 16 gelenkig angebunden ist. Der ebenfalls gelenkig am Rahmen 4 angeordnete Bunker 14, der Lenker 20 und der Laufsteg 17 bilden mit dem Rahmen ein Viergelenk aus, welches durch die Bewegung des Stellmittels 18 zwangsgeführt ist. Durch die Verschwenkung des Bunkers wird der Laufsteg 17 relativ zum Bunker 14 bewegt und verschwenkt sowohl gegenüber dem Bunker 14 als auch dem Rahmen 4. Hierbei nähert sich die obere Trittfläche des Laufstegs 17 der Bunkerwand 16 an, so dass in einer Draufsicht betrachtet und bezogen auf die Fahrt- bzw. Längsrichtung der Legemaschine 2 die Längserstreckung des Laufstegs 17 abnimmt. Durch das Verschwenken des Laufstegs 17 und Heranklappen in Richtung der vorderen Bunkerwand 16 kann der Bunker 14 in den vorherigen Wartungsbereich verschwenken, so dass die Funktionalität des Bunkers 14 trotz des Laufstegs weiterhin gewährleistet bleibt.

Eine mehrere Trittstufen 22 aufweisende Leiter 24 führt zum Laufsteg 17 hoch. Diese Leiter 24 ist fest am Rahmen 4 angeordnet und kann ggf. um ein am oberen Ende befindliches Leiterschwenklager 26 hochgeklappt und dort verriegelt werden.

An Stelle einer schwenkbaren Anordnung des Laufstegs 17 relativ zum Bunker 14 kann dieser auch fest an der vorderen Bunkerwand 16 und ggf. an den seitlichen Bunkerwänden 14 positioniert und angeordnet sein und lediglich durch die Verschwenkung des Bunkers14 mit verschwenken. Hierdurch wird zwar in einem geringeren Ausmaß als in der Variante nach den Fig. 1 und 2 in einer Draufsicht die Längserstreckung des Laufstegs 17 reduziert, gleichwohl ist der Laufsteg 17 jedenfalls relativ zu dem Teil des Rahmens 4, an dem auch der Bunker 14 befestigt ist, schwenkbar festgelegt. Wie auch im Ausführungsbeispiel nach den Fig. 1 und 2 ist ein Geländer 28 fest am Rahmen 4 angeordnet und verschwenkt nicht mit. Mit einer Abdeckung 19 bildet der Laufsteg 17 eine begehbare Fläche aus.

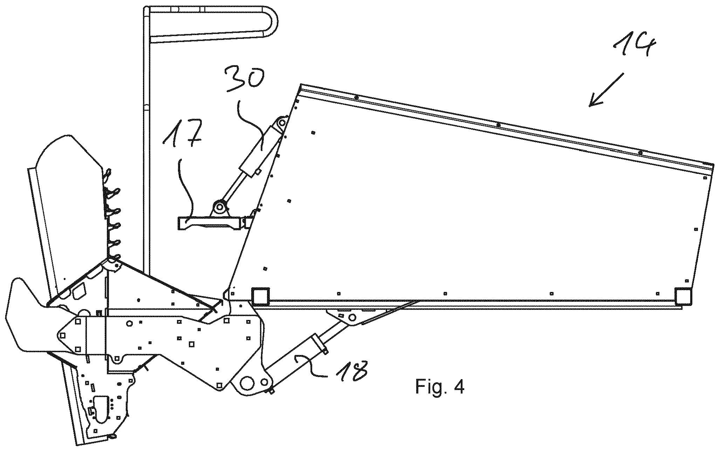

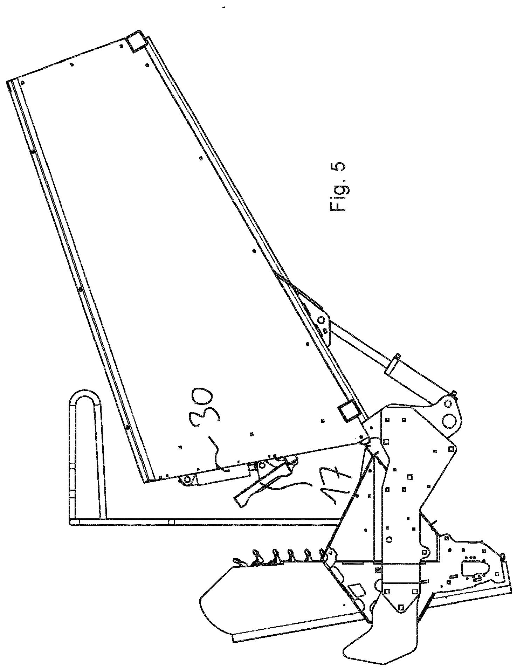

Auch im Ausführungsbeispiel der Fig. 4 ist der Laufsteg 17 lediglich am Bunker 14 angeordnet und verschwenkt mit diesem mit. Somit führt eine Betätigung des Stellmittels 18 ebenfalls zu einem Verschwenken des Laufstegs 17. Allerdings ist zusätzlich ein weiteres Stellmittel 30 zur Verschwenkung des Laufstegs 17 an dem Bunker 14 angeordnet. Dieses kann die Verschwenkung des Laufstegs 17 durch die Betätigung des Stellmittels 18 entweder kompensieren oder überkompensieren und den Laufsteg 17 in die in der Fig. 5 gezeigte Außerbetriebsstellung überführen, in der der Laufsteg 17 möglichst dicht an die vordere Bunkerwand 16 herangeführt ist. Durch einen minimalen Winkel zwischen der Längsachse des als Hydraulikzylinder ausgebildeten Stellmittels 30 und einer Geraden zwischen dem oberen Lager des Stellmittels 30 und einem unteren Lager des Laufstegs 17 befindet sich der Hydraulikzylinder nicht in einer Totpunktstellung.

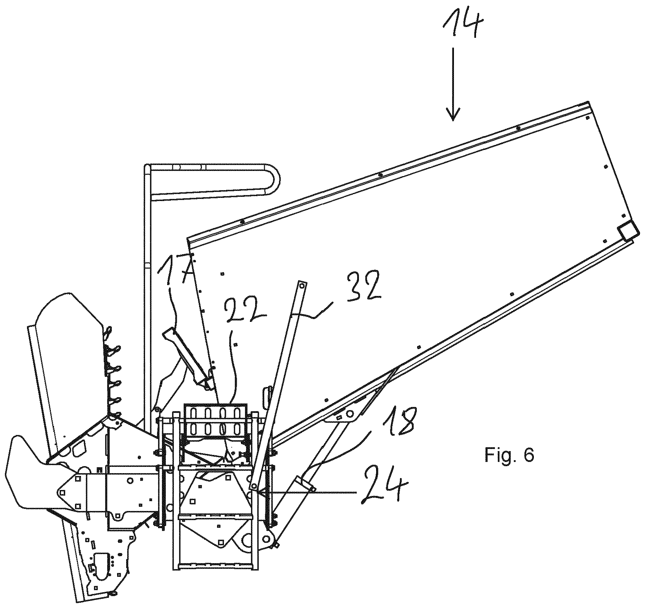

In Ergänzung zu der Anlenkung des Laufstegs 17 gemäß dem Ausführungsbeispiel der Fig. 1 und 2 ist die oberste Trittstufe 22 der Leiter 24 im Ausführungsbeispiel der Fig. 6 schwenkbeweglich um eine Achse parallel zur Längsachse der Legemaschine. Durch eine mechanische Kopplung zwischen Bunker 14 bzw. Stellmittel 18 und der Trittstufe 22, die beispielsweise durch eine Stange 30 realisiert werden kann, wird die Trittstufe 22 verschwenkt, wenn der Bunker 14 verschwenkt.

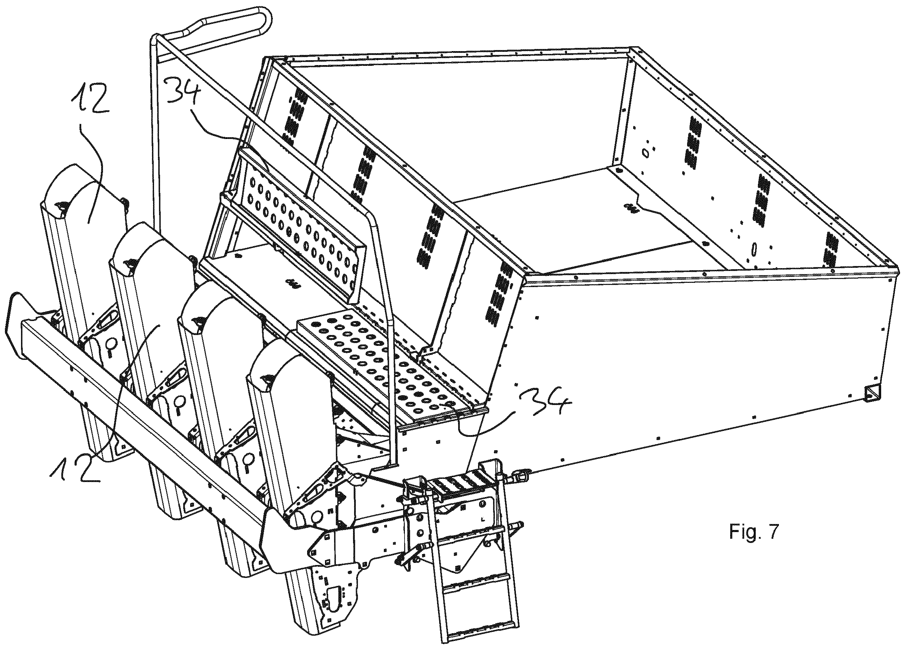

Der Laufsteg 17, bzw. die begehbare Fläche, kann gemäß dem Ausführungsbeispiel nach der Fig. 7 darüber hinaus mehreren Teilen, vorliegend in Form von zwei Flächenelementen 34, aufgebaut sein, die relativ zueinander bewegbar sind und für sich jeweils verschwenken können. Durch ein Hochschwenken wird der Zugriff auf einen unter den Flächenelementen 34 jeweils vorhandenen Raum ermöglicht. So können beispielsweise Wartungsarbeiten im Bereich der zu den Legevorrichtungen 12 gehörenden Vorratstrichter ermöglicht werden.

## Patentansprüche

1. Legemaschine für Hackfrüchte, vorzugsweise für Kartoffeln, mit einem Rahmen (4), der zwischen einem vorderen Kupplungselement (6) und einem hinteren, insbesondere eine Bodenabstützung (8) aufweisenden Ende verläuft,
mit wenigstens einer Legevorrichtung (12),
mit wenigstens einem Bunker (14) für das zu legende Saatgut,
mit einem von einer Seite der Legemaschine her betretbaren Laufsteg (17),
**dadurch gekennzeichnet, dass**
der Laufsteg (17) zwischen Bunker (14) und Legevorrichtung (12) angeordnet ist.

2. Legemaschine nach Anspruch 1, **dadurch gekennzeichnet, dass** der Laufsteg (17) aus einer ersten Betriebsstellung in eine zweite Stellung überführbar ausgebildet ist, vorzugsweise in der der Laufsteg (17) gegenüber der Betriebsstellung verschwenkt ist.

3. Legemaschine nach Anspruch 2, **gekennzeichnet durch** zumindest ein Stellmittel (18, 30), durch welches der Laufsteg (17) bewegbar und insbesondere verschwenkbar ist.

4. Legemaschine nach Anspruch 3, **dadurch gekennzeichnet, dass** der Laufsteg (17) durch das Stellmittel (18) des Bunkers (14) gemeinsam mit diesem verschwenkbar ist.

5. Legemaschine nach Anspruch einem der vorherigen Ansprüche, **dadurch gekennzeichnet, dass** der Laufsteg (17) relativ zum Rahmen (4) schwenkbar gelagert ist.

6. Legemaschine nach einem der vorherigen Ansprüche, **dadurch gekennzeichnet, dass** der Laufsteg (17) über wenigstens einen Lenker (20) mit dem Rahmen (4) verbunden ist.

7. Legemaschine nach einem der vorherigen Ansprüche, **dadurch gekennzeichnet, dass** Laufsteg (17) relativ zum Bunker (14) schwenkbar gelagert ist.

8. Legemaschine nach einem der vorherigen Ansprüche, **dadurch gekennzeichnet, dass** der Laufsteg (17) über zumindest einen Bunkerlenker am Bunker (14) gelagert ist.

9. Legemaschine nach Anspruch 7 und unter Einschluss von Anspruch 6, **dadurch gekennzeichnet, dass** in einer Seitenansicht der Laufsteg (17) Teil eines Dreigelenks mit Rahmen (4) und Bunker (14) ist.

10. Legemaschine nach Anspruch 8 und unter Einschluss von Anspruch 6, **dadurch gekennzeichnet, dass** in einer Seitenansicht der Laufsteg (17) Teil eines insbesondere als Parallelogramm ausgebildeten Mehrgelenks mit Rahmen (4) und Bunker (14) ist.

11. Legemaschine nach einem der vorherigen Ansprüche, **gekennzeichnet durch** ein rahmenseitig angeordnetes Geländer (28), welches entlang des Laufstegs (17) führt.

12. Legemaschine nach einem der vorherigen Ansprüche, **gekennzeichnet durch** wenigstens eine Leiter (24) und/oder wenigstens eine Trittstufe (22), die seitlich an der Legemaschine (2) angeordnet ist und zum Laufsteg (17) hochführt, insbesondere wobei die um eine Achse schwenk- oder drehbar gelagerte Trittstufe (22) mit dem Laufsteg (17) in eine Außerbetriebsstellung überführbar ist.

13. Legemaschine nach einem der vorherigen Ansprüche, **gekennzeichnet, durch** eine am Bunker (14) angeordnete Abdeckung (19), die in einer Wartungsposition der Legemaschine mit dem Laufsteg eine begehbare Fläche ausbildet.

14. Legemaschine nach einem der vorherigen Ansprüche, **dadurch gekennzeichnet, dass** der Laufsteg (17) entlang seiner Breite mehrteilig ausgebildet ist, wobei die zumindest zwei Teile relativ zueinander bewegbar sind.

15. Legemaschine nach einem der vorherigen Ansprüche, **gekennzeichnet durch** einen Lagesensor zum Einschalten eines Beleuchtungsmittels.
